# EUROPEAN PATENT APPLICATION

(11) **EP 2 602 529 A2**
(43) Date of publication of application: **12.06.2013**
(21) Application number: 12191725.6
(22) Date of filing: 08.11.2012
(51) Int. Cl.: F16L 19/05, F16L 25/00

(54) **Pipe joint**

(30) Priority: 16.11.2011 JP 2011250391; 20.07.2012 JP 2012161075
(71) Applicant: HITACHI METALS, LTD., Minato-ku, Tokyo 105-8614 (JP)
(72) Inventor: Inotani, Takaaki, Mie, 511-8511 (JP); Toku, Takashi, Mie, 511-8511 (JP); Ibayashi, Makoto, Mie, 511-8511 (JP); Hattori, Akihiro, Mie, 511-8511 (JP); Yoshida, Yoshinori, Mie, 511-8511 (JP); Namba, Toshihiro, Mie, 511-8511 (JP)
(74) Representative: MERH-IP Matias Erny Reichl Hoffmann

(57) **Abstract**

A pipe joint comprising a joint body (1) having a through-hole (14) having female screw (13), a sleeve (2) holding a tip-end portion of a corrugated pipe (4) in the through-hole (14), and a nut (3) having a male screw (19) threadably engageable with the female screw (13) of the joint body (1); the sleeve (2) comprising a resin ring (21), and metal segments (22) integrally provided on an outer surface of a longitudinal forward portion of the resin ring (21); metal segments having (22) inward nails (25) in their longitudinal front ends and being provided with a resin step (24) at longitudinal rear ends; and when the nut (3) threadably engages the joint body (1) to a finish position, (a) a front ridge of the corrugated pipe (1) passing the nails (25) of the sleeve (2) being flattened to achieve gas-tight communication between the corrugated pipe (4) and the through-hole (14) of the joint body (1), and (b) the resin step (24) of the sleeve (2) being deformed to permit the metal segments (22) to have contact with the tip-end portion of the nut (3), so that the nut (3) is electrically connected to the corrugated pipe (4) via the sleeve (2).

## Description

### FIELD OF THE INVENTION

The present invention relates to a pipe joint coupled to a corrugated pipe for flowing a fluid, particularly to a pipe joint whose electric conduction test to a corrugated pipe can be conducted easily and surely.

### BACKGROUND OF THE INVENTION

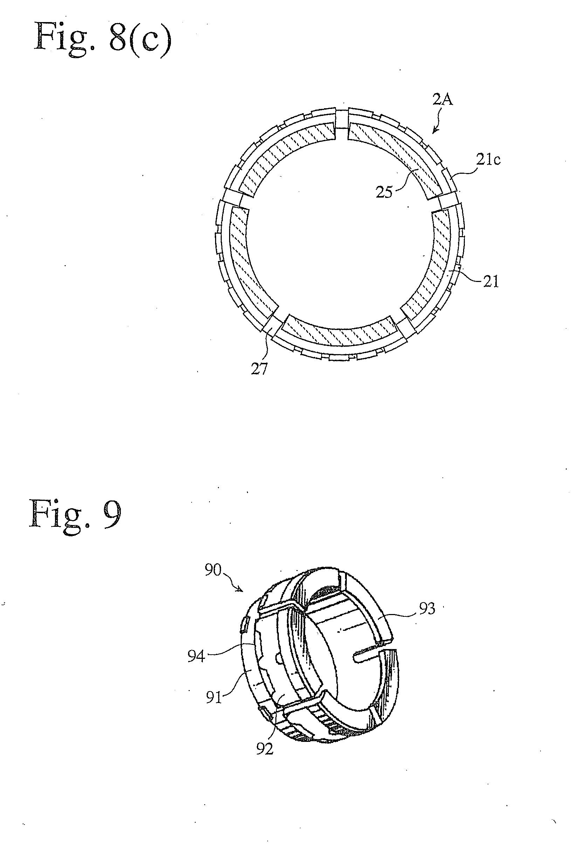

As pipes for supplying a gas or water, flexible corrugated metal pipes have been widely used, and various pipe joints to be coupled to corrugated pipes have been proposed. For example, JP 7-151279 A discloses a pipe joint comprising a joint body, a sleeve for holding a tip-end portion of a corrugated pipe in a through-hole of the joint body, and a nut threadably engaging the joint body, the through-hole of the joint body having a shoulder and a tapered surface adjacent to the shoulder, and a gasket for sealing the tip-end portion of the corrugated pipe being disposed on the shoulder. As shown in Fig. 9, a sleeve 90 used in this pipe joint comprises a resin ring 91, and metal segments 92 integrally provided on an outer surface of a longitudinal forward portion of the resin ring, the metal segments 92 having nails 93 projecting radially inward at their longitudinal front ends, and a step 94 at a longitudinal rear end. A front ridge of the corrugated pipe inserted into the through-hole of the joint body passes the nails 93 of the sleeve 90. With the nut further threadably engaging the joint body, a circle defined by the nails 93 of the sleeve pushed by the nut has a reduced diameter by contact with the tapered surface, so that the front ridge of the corrugated pipe sandwiched by the nails of the sleeve and the gasket is flattened, resulting in gas-tight communication between the corrugated pipe and the through-hole of the joint body.

As is clear from Fig. 9, however, because the metal segments 92 are exposed on the step 94 of the sleeve 90, the tip-end portion of the nut abutting the step 94 of the sleeve 90 is electrically connected to the nut and the corrugated pipe via the sleeve 90. Accordingly, whether or not a normal coupling operation has been conducted cannot be determined by an electric conduction test between the corrugated pipe and the pipe joint after the coupling operation, but what should be relied on is a click when the front ridge of the corrugated pipe passes the nails 93 of the sleeve 90.

### OBJECT OF THE INVENTION

Accordingly, an object of the present invention is to provide a pipe joint, whose normal coupling to a corrugated pipe can be easily and surely confirmed by an electrical conduction test.

### SUMMARY OF THE INVENTION

The first pipe joint of the present invention comprises a joint body having a through-hole having female screw, a sleeve holding a tip-end portion of a corrugated pipe in the through-hole, and a nut having a male screw threadably engageable with the female screw of the joint body;
the through-hole of the joint body having a shoulder, on which a gasket for sealing the tip-end portion of the corrugated pipe is disposed;
the sleeve comprising a resin ring and metal segments integrally provided on an outer surface of a longitudinal forward portion of the resin ring, the metal segments having nails projecting radially inward at their longitudinal front ends, being provided with a resin step at their longitudinal rear ends, and covered with an annular resin layer in their longitudinal forward portions; and
upon completion of the threadable engagement of the nut with the joint body after a front ridge of the corrugated pipe passes the nails of the sleeve, (a) a front ridge of the corrugated pipe sandwiched by the nails of the sleeve and the gasket being flattened, resulting in gas-tight communication between the corrugated pipe and the through-hole of the joint body, and (b) the resin step of the sleeve being deformed to permit the metal segments to have contact with a tip-end portion of the nut, so that the nut is electrically connected to the corrugated pipe via the sleeve.

The through-hole of the joint body preferably has a tapered surface adjacent to the shoulder, the diameter of a circle defined by the nails of the sleeve pushed by the nut being reduced by contact with the tapered surface upon completion of the threadable engagement of the nut with the joint body, so that the nails bite a groove of the corrugated pipe, resulting in gas-tight communication between the corrugated pipe and the through-hole of the joint body.

It is preferable that the through-hole of the joint body has an annular increased-diameter portion outside the tapered surface, that after the nut threadably engages the joint body such that the metal segments are put at a position facing the annular increased-diameter portion, the corrugated pipe is inserted into the through-hole of the joint body through an opening of the nut, and that after a front ridge of the corrugated pipe passes the nails of the sleeve, the nut threadably engages the joint body to a finish position.

It is preferable that a tip-end portion of the nut pushing the sleeve has a shape of an inward-projecting flange, and that the inward flange engages projections on an outer surface of the resin ring of the sleeve, thereby preventing the sleeve from moving forward when a front ridge of the corrugated pipe passes the nails of the sleeve.

At least part of peripheral surfaces of the metal segments of the sleeve on the side of the nails are preferably covered with a resin layer, so that the sleeve is not electrically connected to the joint body without passing through the nut.

It is preferable that the joint body has a stopper on an inner surface of the through-hole, that the nut has a stopper on an outer surface of the small-diameter pipe portion, and that the stopper of the joint body engages the stopper of the nut upon completion of threadable engagement of the nut with the joint body, thereby preventing the detachment of the nut.

With a spacer ring interposed between the joint body and the nut to keep them at a predetermined distance, the corrugated pipe is preferably pushed into the joint body, so that one front ridge of the corrugated pipe passes the nails of the sleeve.

The second pipe joint of the present invention comprises a joint body having a through-hole having female screw, a sleeve holding a tip-end portion of a corrugated pipe in the through-hole, and a nut having a male screw threadably engageable with the female screw of the joint body;
the through-hole of the joint body having a shoulder and a tapered surface, a gasket for sealing the tip-end portion of the corrugated pipe being disposed on the shoulder;
the sleeve comprising a resin ring and metal segments integrally provided on an outer surface of a longitudinal forward portion of the resin ring, the metal segments having nails projecting radially inward at their longitudinal front ends, being provided with a resin step at their longitudinal rear ends, and annularly covered with intermittent resin layers in their longitudinal forward portions; and
when the threadable engagement of the nut with the joint body is completed after a front ridge of the corrugated pipe passes the nails of the sleeve, (a) a front ridge of the corrugated pipe sandwiched by the nails of the sleeve and the gasket being flattened, resulting in gas-tight communication between the corrugated pipe and the through-hole of the joint body, and (b) the intermittent resin layers of the sleeve being removed by contact with the tapered surface of the joint body to bring the metal segments into contact with the tapered surface of the joint body, thereby achieving electric connection between the joint body and the corrugated pipe via the sleeve.

### BRIEF DESCRIPTION OF THE DRAWINGS

Fig. 1(a) is a partially cross-sectional, exploded side view showing the pipe joint of the present invention.

Fig. 1(b) is a partially cross-sectional, exploded side view showing the joint of Fig. 1(a) in a state before a corrugated pipe is inserted.

Fig. 2(a) is a perspective view showing one example of sleeves used in the pipe joint of the present invention.

Fig. 2(b) is a side view showing the sleeve of Fig. 2(a).

Fig. 2(c) is a bottom view showing the sleeve of Fig. 2(a).

Fig. 3(a) is a cross-sectional view taken along the line A-A in Fig. 2(c).

Fig. 3(b) is a cross-sectional view taken along the line B-B in Fig. 2(c).

Fig. 3(c) is a partial, enlarged side view showing the size of a slit formed in a resin step, which is open to a projection in a metal segment.

Fig. 4(a) is a partially cross-sectional side view showing a pipe joint in which a corrugated pipe is inserted into a joint body after a nut slightly threadably engages the joint body.

Fig. 4(b) is partially cross-sectional side view showing a pipe joint in which a corrugated pipe is inserted deep into the joint body, so that a front ridge of the corrugated pipe passes the nails of the sleeve.

Fig. 5(a) is a partial, enlarged, cross-sectional view the positional relation between a stopper of the joint body and a stopper of the nut in the state shown in Fig. 4(a).

Fig. 5(b) is a partial, enlarged, cross-sectional view showing a state where the stopper of the nut is brought into contact with the stopper of the joint body by threadably engaging the nut to the joint body.

Fig. 6 is a partially cross-sectional side view showing the pipe joint of the present invention, in which the threadable engagement of the nut with the joint body is completed.

Fig. 7 is a partial, enlarged, cross-sectional view showing the positional relation between the stopper of the joint body and the stopper of the nut in the state shown in Fig. 6.

Fig. 8(a) is a perspective view showing another example of sleeves used in the pipe joint of the present invention.

Fig. 8(b) is a side view showing the sleeve of Fig. 8(a).

Fig. 8(c) is a bottom view showing the sleeve of Fig. 8(a).

Fig. 9 is a perspective view showing a sleeve used in the pipe joint of JP 7-151279 A.

### DESCRIPTION OF THE PREFERRED EMBODIMENTS

The embodiments of the present invention will be explained in detail below without intention of restriction, with proper modifications possible within the scope of the present invention. Explanations of each embodiment are applicable to other embodiments unless otherwise mentioned.

[1] Structure of pipe joint

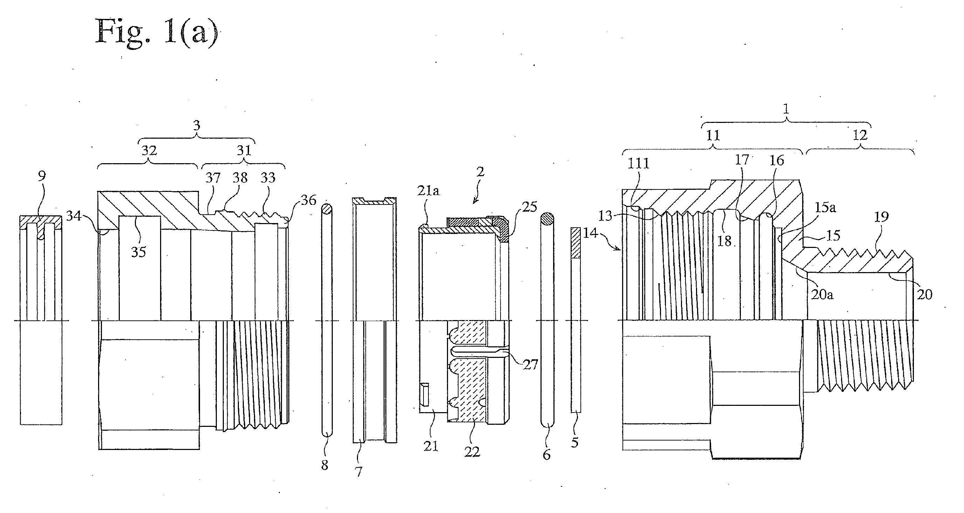

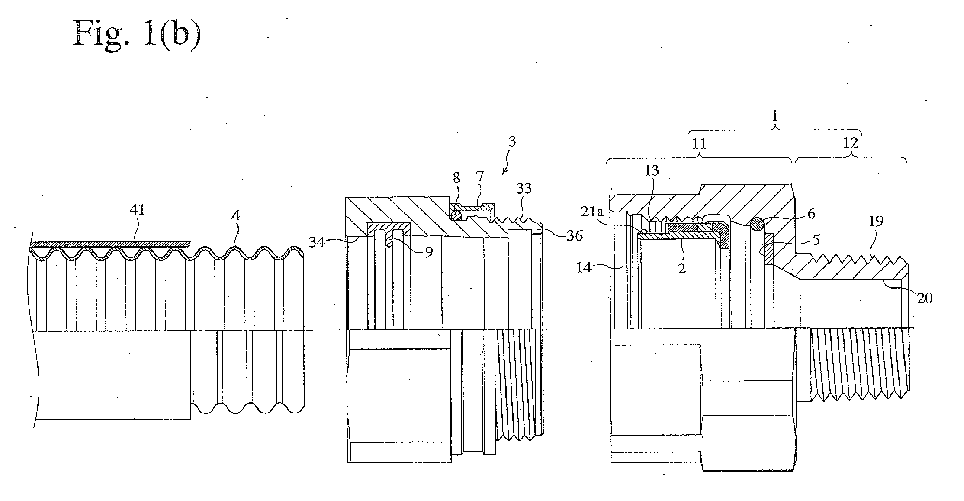

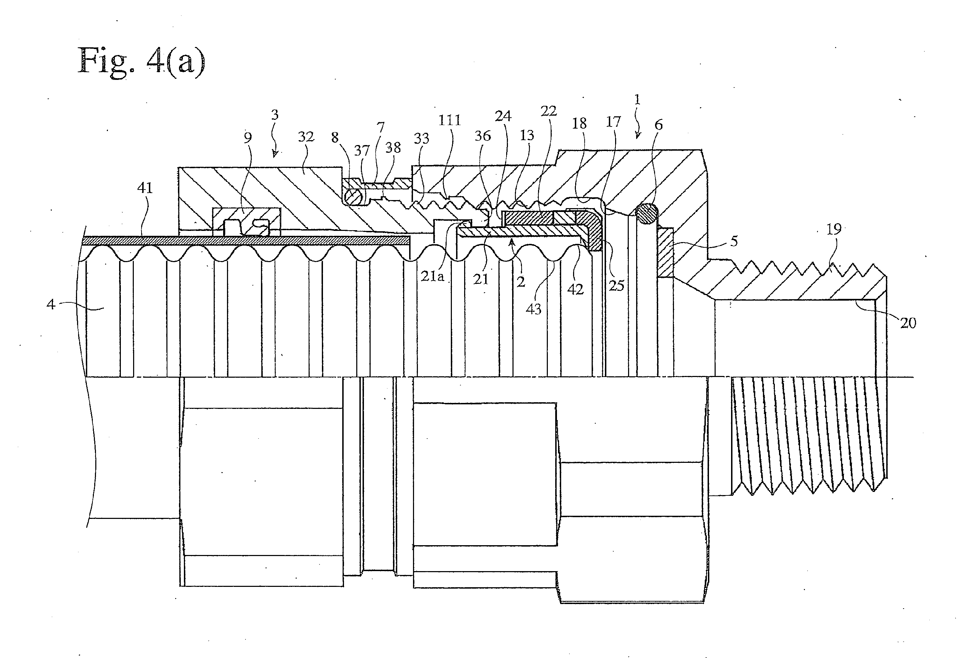

As shown in Figs. 1(a), 1(b) and 4(a), the pipe joint of the present invention comprises (a) a joint body 1 made of a conductive metal, which integrally comprises a large-diameter pipe portion 11 having a through-hole 14 having a female screw 13 on an inner surface, and a small-diameter pipe portion 12 having a male screw 19 on an outer surface and a through-hole 20 concentrically communicating with the through-hole 14, (b) a sleeve 2 inserted between an inner surface of the through-hole 14 of the large-diameter pipe portion 11 of the joint body 1 and a tip-end portion of a corrugated pipe 4 to hold the tip-end portion of the corrugated pipe 4 inserted into the through-hole 14 of the large-diameter pipe portion 11, and (c) a nut 3 made of a conductive metal, which comprises a small-diameter pipe portion 31 having a male screw 33 threadably engageable with the female screw 13 of the large-diameter pipe portion 11 of the joint body 1, a large-diameter nut body 32, a through-hole 34 extending from the small-diameter pipe portion 31 to the nut body 32, and an annular groove 35 provided on an inner surface of the through-hole 34 for receiving a rubber packing 9 with an E-shaped cross section. In this embodiment, because the male screw 33 of the nut 3 is threadably engageable with the female screw 13 of the joint body 1, the entire pipe joint may have a small diameter.

A step (shoulder) 15 between the large-diameter pipe portion 11 of the joint body 1 and the small-diameter pipe portion 12 has a circular, flat, inner surface 15a, on which a circular gasket 5 for gas-tightly sealing the tip-end portion of the corrugated pipe 4 is disposed. Between the circular flat surface 15a and the female screw 13 of the large-diameter pipe portion 11, there is a tapered surface 17 having an annular groove 16 receiving a circular rubber packing 6 with expanded graphite. An annular, increased-diameter portion 18 is provided between the tapered surface 17 and the female screw 13. Further, between the circular flat surface 15a and the through-hole 20 of the small-diameter pipe portion 12, there is a tapered surface 20a for connecting them smoothly.

As shown in Figs. 1-3, the sleeve 2 is composed of a resin ring 21, and metal segments 22 integrally provided on an outer surface of the resin ring 21 on the longitudinal forward side (the deep side of the joint body 1). Resins for the resin ring 21 include polyacetal (POM), polyolefins such as polyethylene and polypropylene, etc., which are elastically or plastically deformable. Preferable among them is polyacetal having excellent elastic deformability. The resin ring 21 has pluralities of circumferential projections 21a along its longitudinal rear edge. Each segment 22 made of a metal such as brass has projections 22a on a longitudinal rear edge (on the side of the nut 3), and a resin step 24 is formed on the rear side of the rear edges of the metal segments 22. The resin step 24 has longitudinal slits 24a at a position of each projection 22a of the metal segment 22, each slit 24a being as deep as reaching the projection 22a. The depicted projection 22a has a semi-circular shape, though not restrictive.
It may have any shape as long as it can be exposed by the deformation of the resin step 24 and surely have electric connection to a tip-end portion of the nut 3. The metal segments 22 have functions of increasing the rigidity of the sleeve 2 and achieving electric conduction between the nails 25 and the corrugated pipe 4.

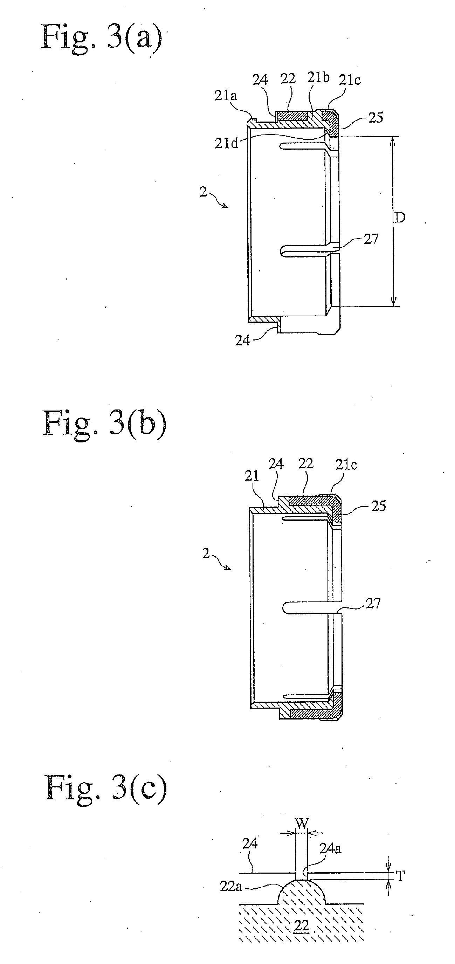

As shown in Fig. 3(c), the distance T between a surface of the resin step 24 and the metal projection 22a (depth of the slit 24a) is preferably set, such that (a) when the tip-end portion of the nut 3 abuts the resin step 24, there is sufficient insulation between the tip-end portion of the nut 3 and the metal projection 22a, but (b) when the tip-end portion of the nut 3 strongly presses the resin step 24 by the threadable engagement of the nut 3 with the joint body 1, the resin step 24 is deformed until the metal projection 22a is exposed, so that the tip-end portion of the nut 3 is surely electrically connected to the metal projection 22a. The slit 24a preferably has such a width W that the resin step 24 pressed by the tip-end portion of the nut 3 is deformed to surely expose the metal projection 22a.

Each metal segment 22 has a nail 25 on the longitudinal front side (on the side of the circular gasket 5). A diameter D of a circle formed by the tip ends of all nails 25 is smaller than the diameter of a ridge and larger than the diameter of a groove in the corrugated pipe 4. Extending between adjacent metal segments 22 are pluralities of longitudinal slits 27 having substantially the same depth as the longitudinal length of the metal segments 22, which are open on the longitudinal front side. Because portions of the sleeve 2 divided by the slits 27 (composed of the metal segment 22 and the resin ring 21) are resiliently deformable, the nails 25 can be expanded or closed.

Each metal segment 22 has an opening 22c, and a resin portion 21b filling the opening 22c acts to secure the bonding of the metal segments 22 to the resin ring 21. Longitudinal forward outer surfaces of the metal segments 22 are covered with an integral, annular resin layer 21c for making sure electric insulation from the joint body 1. A resin layer 21d having a tapered inner surface is formed on an inner surface of each nail 25, such that the ridge of the corrugated pipe 4 can smoothly pass the nail 25.

The sleeve 2 can be integrally formed by an insert-molding method, which comprises placing metal plate pieces for segments 22 each having projections 22a on one end and a nail 25 on the other end in an injection-molding die cavity having pluralities of ridges corresponding to the slits 27, and injecting the resin into the cavity. Incidentally, pluralities of metal segments 22 need not be completely separate, but may be partially connected on the rear side.

As shown in Fig. 1(a), the small-diameter pipe portion 31 of the nut 3 is provided with an inward flange 36 at its tip end. The small-diameter pipe portion 31 of the nut 3 also has an annular groove 37 for receiving an O-ring 8 for gas-tight sealing on the deepest side (adjacent to the nut body 32). A spacer ring 7 mounted to the small-diameter pipe portion 31 of the nut 3 has a function to regulate how deep the nut 3 threadably engages the joint body 1 (how deep the tip-end inward flange 36 of the nut 3 enters the through-hole 14 of the joint body 1). The spacer ring 7 in the form of a C-ring shape is formed by elastic plastics, having one longitudinal slit at a circumferential position, and having a longitudinal cross section having both thick end portions and a thin center portion.

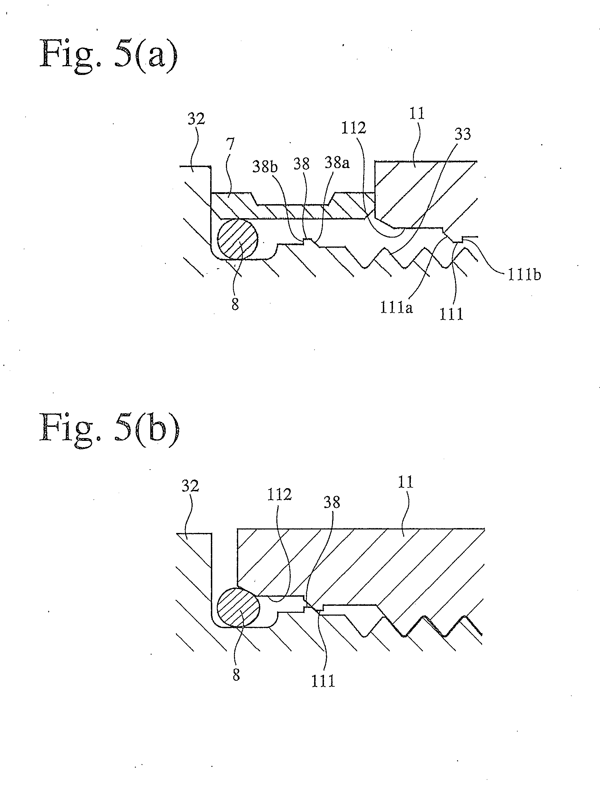

As shown in Fig. 5(a), the large-diameter pipe portion 11 of the joint body 1 has a stopper 111 in an inward projection shape on an inner surface outside the female screw 13, and a notch 112 for receiving the O-ring 8 outside the stopper 111. The stopper 111 has an inclined surface 111a having an increasing diameter toward the notch 112, and a substantially vertical surface 111b on the side of the female screw 13. The stopper 111 has an inner diameter larger than the diameter of grooves of the female screw 13. The small-diameter pipe portion 31 of the nut 3 has a stopper 38 in an outer projection shape between the nut body 32 and the male screw 33. The stopper 38 has an inclined surface 38a having a decreasing diameter toward the male screw 33, and a substantially vertical surface 38b on the side of the nut body 32. The stopper 38 has an outer diameter larger than the diameter of ridges of the male screw 33.

[2] Assembling of pipe joint

As shown in Figs. 1(a) and 1(b), with the circular gasket 5 disposed on the circular flat surface 15a of the shoulder 15 of the joint body 1, the circular rubber packing 6 is inserted into the annular groove 16 on the tapered surface 17. On the other hand, after the O-ring 8 is inserted into the annular groove 37 in the small-diameter pipe portion 31 of the nut 3, the spacer ring 7 is mounted to the small-diameter pipe portion 31. To prevent water from entering the pipe joint, the rubber packing 9 with an E-shaped cross section is inserted into the annular groove 35 on the inner surface of the through-hole 34 of the nut 3.

With the circumferential projections 21a of the sleeve 2 engaging the inward flange 36 of the small-diameter pipe portion 31 of the nut 3, the sleeve 2 and the nut 3 are inserted into the through-hole 14 of the joint body 1, and the male screw 33 of the nut 3 slightly threadably engages the female screw 13 of the joint body 1, until the front end surface of the nut body 32 and the rear end surface of the large-diameter pipe portion 11 of the joint body 1 are brought into contact with both ends of the spacer ring 7 as shown in Fig. 4(a). In this state, the nails 25 of the metal segments 22 in the sleeve 2 are facing the annular increased-diameter portion 18 of the joint body 1.

With a resin cover 41 of polyvinyl chloride, etc. for improving weathering resistance and preventing damage removed from the tip-end portion of the flexible, corrugated pipe 4 in a length corresponding to 4 to 5 ridges, the corrugated pipe 4 is inserted into the through-hole 14 of the joint body 1 through an opening of the nut 3. As shown in Fig. 4(a), the corrugated pipe 4 advances in the through-hole 14 of the joint body 1, until its front ridge abuts the nails 25 of the sleeve 2. In this state, the circumferential projections 21a of the sleeve 2 pushed by the tip-end portion of the corrugated pipe 4 are engaging with the front inward flange 36 of the nut 3, so that the sleeve 2 does not advance forward in the through-hole 14 of the joint body 1.

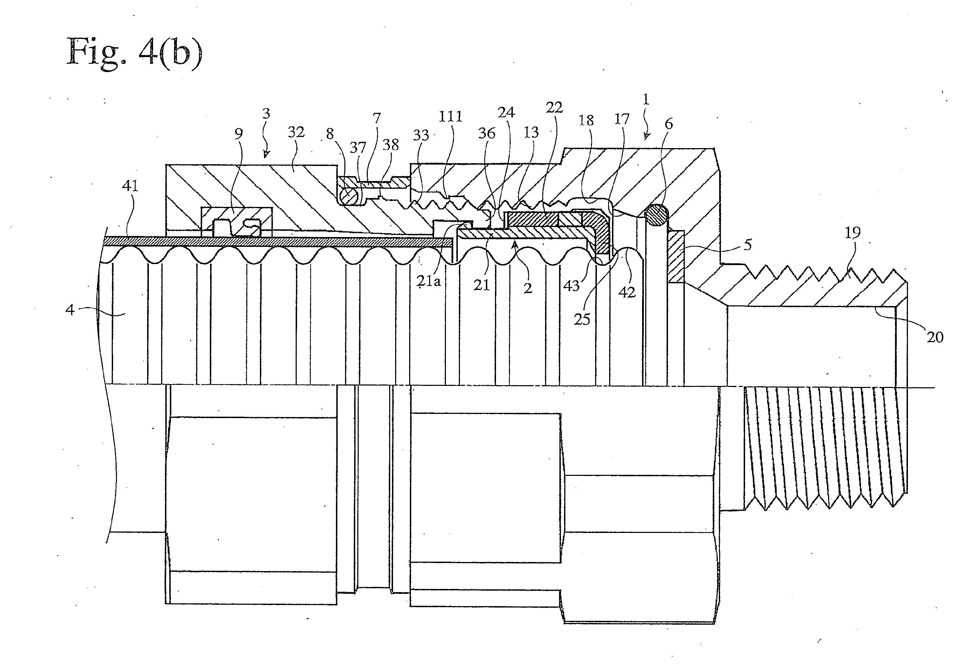

With the corrugated pipe 4 further pushed, a front slope of the front ridge 42 of the corrugated pipe 4 comes into sliding contact with the tapered resin layer 21d on the inner surfaces of the nails 25 of the sleeve 2, so that the nails 25 are pushed outward radially. Because the metal segments 22 of the sleeve 2 positioned near the annular increased-diameter portion 18 can be resiliently deformed outward, the nails 25 are expanded (the diameter D of a circle defined by the nails 25 is enlarged), so that a front ridge 42 of the corrugated pipe 4 can pass the nails 25 as shown in Fig. 4(b).

In the depicted example, the width (longitudinal length) of the spacer ring 7 is set, such that when the front end surface of the nut body 32 and the rear end surface of the large-diameter pipe portion 11 of the joint body 1 are brought into contact with the spacer ring 7, one front ridge 42 of the corrugated pipe 4 passes the nails 25 of the sleeve 2. Of course, the present invention is not restricted thereto, but several ridges of the corrugated pipe 4 may pass the nails 25. In this case, however, it cannot be detected after fastening the nut 3 whether or not all necessary ridges have passed the nails 25.

In the case of a structure in which only one ridge passes the nails 25, the corrugated pipe 4 would be pulled out of the joint body 1 even with the nut 3 screwed tight to the joint body 1, unless the ridge of the corrugated pipe 4 passes the nails 25. On the other hand, if the ridge of the corrugated pipe 4 passed the nails 25, the corrugated pipe 4 would not advance further because the nails 25 engage the groove 43 of the corrugated pipe 4, and the corrugated pipe 4 would not be pulled out because the nails 25 abut the ridge 42 of the corrugated pipe 4, making it possible to confirm that the corrugated pipe 4 has been normally inserted into the joint body 1. If the corrugated pipe 4 were pulled out, the corrugated pipe 4 would have to be pushed into the joint body 1 until the front ridge 42 passes the nails 25, because the ridge 42 of the corrugated pipe 4 has not passed the nails 25. Thus, the structure permitting only one ridge to go beyond the nails 25 is preferable. The term "one ridge" means a range from 0.5 to 1.5 ridges.

If the corrugated pipe 4 were pulled after the ridge 42 of the corrugated pipe 4 passed the nails 25, its ridge 42 would engage the nails 25, making the sleeve 2 slide in a pulling-out direction (toward the nut 3), but the step 24 of the sleeve 2 would abut the inward flange 36 of the nut 3, stopping the sleeve 2. When the sleeve 2 returns to this position, the nails 25 of the sleeve 2 move from a position facing the annular increased-diameter portion 18 on the inner surface of the joint body 1 to a position facing the female screw 13 having a smaller inner diameter than that of the annular increased-diameter portion 18. Because an expandable range of the nails 25 of the sleeve 2 is limited by the small inner diameter of the female screw 13 at this position, the ridge 42 of the corrugated pipe 4 cannot pass the nails 25 of the sleeve 2, thereby preventing the corrugated pipe 4 from being pulled out of the joint body 1.

As shown in Fig. 4(b), when the male screw 33 of the nut 3 further threadably engages the female screw 13 of the joint body 1 after the front ridge 42 of the corrugated pipe 4 passes the nails 25, the C-ring-shaped spacer ring 7 in contact with a front end surface of the nut body 32 and a rear end surface of the large-diameter pipe portion 11 of the joint body 1 is broken in its thin center portion, so that the spacer ring 7 is detached. Of course, before further rotating the nut 3, the spacer ring 7 may be detached by hand or using a jig.

The front inward flange 36 of the small-diameter pipe portion 31 of the nut 3 advancing in the through-hole 14 of the joint body 1 abuts the resin step 24 of the sleeve 2, the sleeve 2 pushed by the nut 3 goes deep into the joint body 1, until the front ridge 42 of the corrugated pipe 4 is tightly sandwiched by the gasket 5 and the nails 25 of the sleeve 2. In this state, the metal projection 22a covered with the resin step 24 does not come into direct contact with the front inward flange 36 of the nut 3, keeping electric insulation between them.

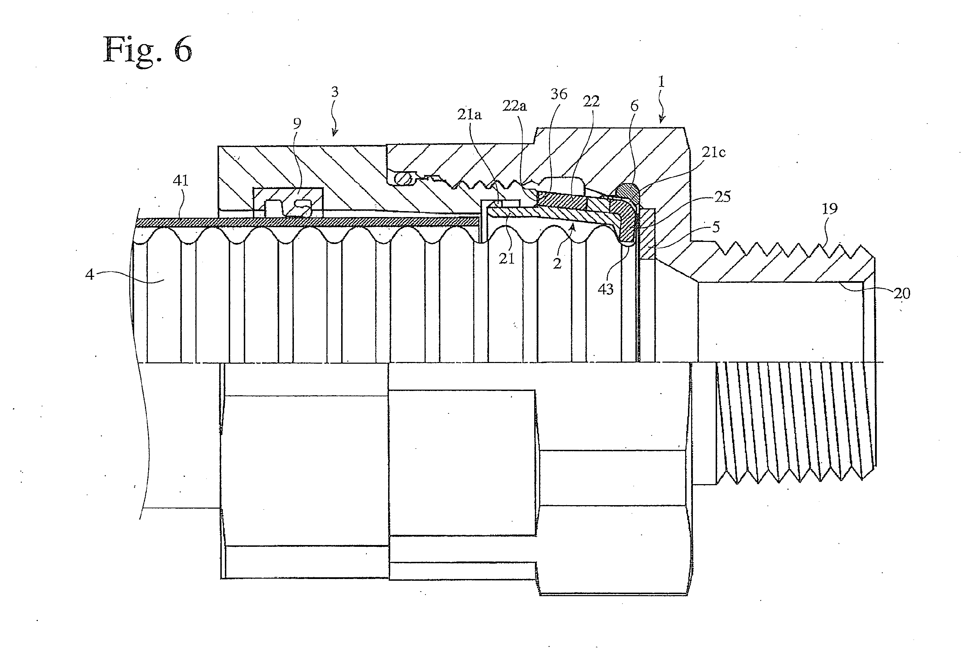

When the nut 3 further threadably engages the joint body 1 from a state where the front ridge 42 of the corrugated pipe 4 is tightly sandwiched by the gasket 5 and the nails 25, the sleeve 2 advances while compressing the front ridge 42 of the corrugated pipe 4. The sliding contact of the sleeve 2 with the tapered surface 17 having a smaller inner diameter toward the deeper side reduces a diameter of a circle defined by the nails 25 of the sleeve 2 by resilient deformation. The nails 25 of the sleeve 2 received in the groove 43 of the corrugated pipe 4 bite the groove 43 as the sleeve 2 goes deeper, so that the nails 25 are radially fastened to the groove 43. At the same time, the nails 25 of the sleeve 2 press the front ridge 42 of the corrugated pipe 4 to the gasket 5. As a result, the front ridge 42 of the corrugated pipe 4 passing the nails 25 is flattened by compression as shown in Fig. 6, resulting in gas tightness. Because the resin step 24 of the sleeve 2 is plastically deformed by pressure by the inward flange 36 of the nut 3, exposed projections 22a of the metal segments 22 are brought into electric contact with the inward flange 36 of the nut 3. A tip-end portion (the resin layer 21c covering the nails 25) of the sleeve 2 inserted deepest into the joint body 1 is brought into contact with the circular rubber packing 6, though gas tightness is not needed between them. The circular rubber packing 6 is a member for securing gas tightness by expansion at the time of firing.

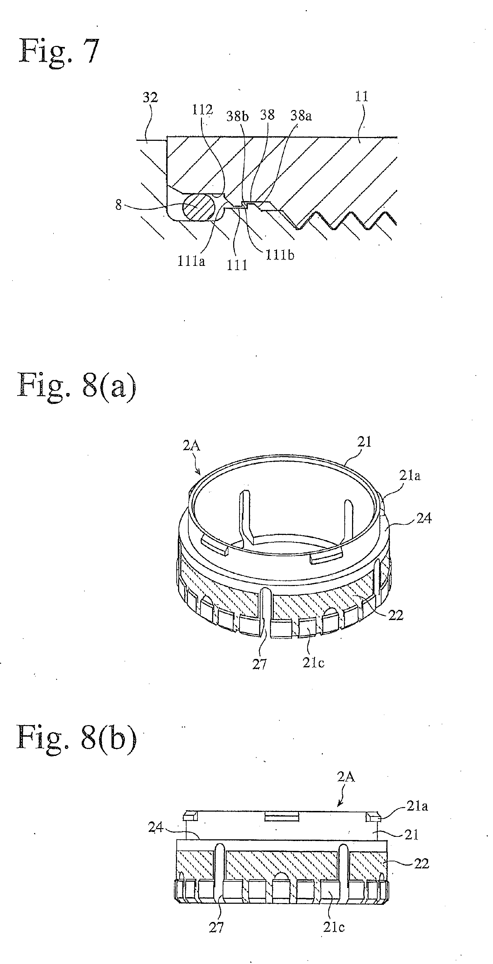

As shown in Figs. 5(a) and 5(b), as the male screw 33 of the nut 3 threadably engages the female screw 13 of the joint body 1, the stopper 38 of the nut 3 gets closer to the stopper 111 of the joint body 1, so that the inclined surface 38a of the stopper 38 comes into contact with the inclined surface 111a of the stopper 111. Because the nut 3 is rotated with larger resistance when the stopper 38 passes the stopper 111, it is possible to confirm the engagement of the stopper 111 with the stopper 38. As shown in Fig. 7, after the stopper 38 of the nut 3 passes the stopper 111 of the joint body 1, the nut 3 can be rotated by a smaller power, thereby making it possible to confirm the completion of connection.

Even if a disengaging power were applied to the nut 3 after the completion of connection, the stopper 38 would not pass the stopper 111 by the engagement of the vertical surface 111b of the stopper 111 with the vertical surface 38b of the stopper 38, so that the nut 3 is not loosened. Thus, the pipe joint of the present invention has high reliability in gas tightness and connection.

As described above, though the nut 3 is electrically insulated from the sleeve 2 in the process of threadably engaging the nut 3 to the joint body 1, they are put in a electrically connected state after the completion of threadable engagement of the nut 3 with the joint body 1. Because the corrugated pipe 4 is electrically connected to the sleeve 2 via the nails 25, the corrugated pipe 4 is electrically connected to the nut 3 and the joint body 1 via the sleeve 2. Because another joint is coupled to another end of the corrugated pipe 4, an operation inspector can confirm that the corrugated pipe 4 has been correctly coupled to the joint by an electric conduction test between them by a circuit tester, etc.

The distance between the step 24 of the resin ring 21 of the sleeve 2 and the projections 22a of the metal segments 22 should be such that (a) electric insulation is kept while the nut 3 abuts the resin step 24 of the sleeve 2, but that (b) when the threadable engagement of the nut 3 is completed, the resin step 24 is plastically deformed to permit the inward flange 36 of the nut 3 to have electric contact with the projections 22a of the metal segments 22, preferably about 0.1-0.6 mm.

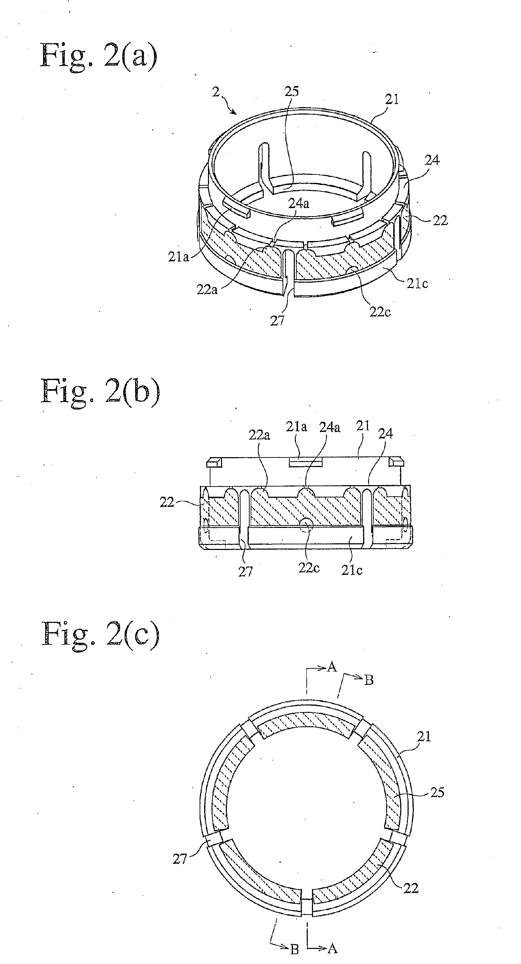

Figs. 8(a)-8(c) show another example of sleeves. This sleeve 2A differs from the sleeve 2 shown in Figs. 2 and 3, in that metal segments 22 do not have projections on their rear edges, that the resin step 24 is not provided with slits 24a, and that longitudinal front portions (portions positioned on the deep side of the joint body 1) of the metal segments 22 are annularly covered with intermittent resin layers 21c. In the sleeve 2A, electric connection is achieved not by the deformation of the resin step 24, but by the removal of the intermittent resin layers 21c pressed by the tapered surface 17 of the joint body 1, which brings the exposed metal segments 22 into electrical contact with the tapered surface 17 of the joint body 1. As a result, the joint body 1 is electrically connected to the corrugated pipe 4 via the sleeve 2. Accordingly, the thickness of the intermittent resin layers 21c is preferably about 0.1-0.6 mm, more preferably about 0.1-0.3 mm.

In the depicted example, the stopper 111 of the joint body 1 is located outside the female screw 13 (on the left side in the figure), and the stopper 38 of the nut 3 is located inside the male screw 33 (on the left side in the figure), but the positions of the stoppers 111 and 38 are not restrictive. For example, the stopper 111 of the joint body 1 may exist on the deeper side of the female screw 13 (on the right side in the figure), and the stopper 38 of the nut 3 may exist outside the male screw 33 (on the right side in the figure). In this case, the stopper 111 has an inner diameter smaller than the ridge diameter of the female screw 13, and the stopper 38 has an outer diameter smaller than the groove diameter of the male screw 33.

### EFFECT OF THE INVENTION

The pipe joint of the present invention has a structure in which a tip-end portion of a corrugated pipe inserted into a joint body threadably engageable with a nut is surrounded by a sleeve, (a) insulation between the nut and the sleeve being not broken by abutment of the nut to a resin step of the sleeve, but (b) when the nut completely threadably engages the joint body, an insulating resin step of the sleeve pressed by the nut is plastically deformed, exposing metal segments, so that the nut comes into electric contact with the metal segments. Because the joint body threadably engaging the nut is electrically connected to the corrugated pipe via the metal segments, an electric conduction test between the corrugated pipe and the pipe joint after a connection operation can easily confirm that a normal coupling has been achieved.
Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination

## Claims

1. A pipe joint comprising a joint body having a through-hole having female screw (13), a sleeve (2) holding a tip-end portion of a corrugated pipe (4) in said through-hole (14), and a nut (3) having a male screw (19) threadably engageable with the female screw (13) of said joint body (1);
the through-hole (14) of said joint body (1) having a shoulder, on which a gasket (5) for sealing the tip-end portion of said corrugated pipe (4) is disposed;
said sleeve (2) comprising a resin ring (21) and metal segments (22) integrally provided on an outer surface of a longitudinal forward portion of said resin ring (21), said metal segments (22) having nails (25) projecting radially inward at their longitudinal front ends, being provided with a resin step (24) at their longitudinal rear ends, and covered with an annular resin layer in their longitudinal forward portions; and
when the threadable engagement of said nut (3) with said joint body (1) is completed after a front ridge of said corrugated pipe (4) passes the nails (25) of said sleeve (2), (a) a front ridge of said corrugated pipe (4) sandwiched by the nails (25) of said sleeve (2) and said gasket (5) being flattened, resulting in gas-tight communication between said corrugated pipe (4) and the through-hole (14) of said joint body (1), and (b) the resin step (24) of said sleeve (2) being deformed to permit said metal segments (22) to have contact with a tip-end portion of said nut (3), so that said nut (3) is electrically connected to said corrugated pipe (4) via said sleeve (2).

2. The pipe joint according to claim 1, wherein the through-hole of said joint body (1) has a tapered surface (17) adjacent to said shoulder, the diameter of a circle defined by the nails (25) of said sleeve (2) pushed by said nut (3) being reduced by contact with said tapered surface (17) upon completion of the threadable engagement of said nut (3) with said joint body (1), so that the nails (25) bite a groove of said corrugated pipe (4), resulting in gas-tight communication between said corrugated pipe (4) and the through-hole (14) of said joint body (1).

3. The pipe joint according to claim 1 or 2, wherein the through-hole (14) of said joint body (1) has an annular increased-diameter portion (18) outside said tapered surface (17); wherein after said nut (3) threadably engages said joint body (1) such that said metal segments (22) are put at a position facing said annular increased-diameter portion (18), said corrugated pipe (4) is inserted into the through-hole (14) of said joint body (1) through an opening of said nut (3); and wherein after a front ridge of said corrugated pipe (4) passes the nails (25) of said sleeve (2), said nut (3) threadably engages said joint body (1) to a finish position.

4. The pipe joint according to any one of claims 1-3, wherein a tip-end portion of said nut (3) pushing said sleeve (2) has a shape of an inward-projecting flange (36); and wherein said inward flange (36) engages projections on an outer surface of said resin ring (21) of said sleeve (2), thereby preventing said sleeve (2) from moving forward when a front ridge of said corrugated pipe (4) passes the nails (25) of said sleeve (2).

5. The pipe joint according to any one of claims 1-4, wherein at least part of peripheral surfaces of said metal segments (22) of said sleeve (2) on the side of said nails (25) are covered with a resin layer, so that said sleeve (2) is not electrically connected to said joint body (1) without passing through said nut (3).

6. The pipe joint according to any one of claims 1-5, wherein said joint body (1) has a stopper (111) on an inner surface of the through-hole (14); wherein said nut (3) has a stopper (111) on an outer surface of the small-diameter pipe portion (31); and wherein said stopper (111) of the joint body (1) engages said stopper (111) of the nut (3) upon completion of threadable engagement of said nut (3) with said joint body (1), thereby preventing the detachment of said nut (3).

7. The pipe joint according to any one of claims 1-6, wherein with a spacer ring (7) interposed between said joint body (1) and said nut (3) to keep them at a predetermined distance, said corrugated pipe (4) is pushed into said joint body (1), so that one front ridge of said corrugated pipe (4) passes the nails (25) of said sleeve (2).

8. A pipe joint comprising a joint body having a through-hole having female screw (13), a sleeve (2) holding a tip-end portion of a corrugated pipe (4) in said through-hole (14), and a nut (3) having a male screw (19) threadably engageable with the female screw (13) of said joint body (1);
the through-hole (14) of said joint body (1) having a shoulder and a tapered surface (17), a gasket (5) for sealing the tip-end portion of said corrugated pipe (4) being disposed on said shoulder;
said sleeve (2) comprising a resin ring (21) and metal segments (22) integrally provided on an outer surface of a longitudinal forward portion of said resin ring (21), said metal segments (22) having nails (25) projecting radially inward at their longitudinal front ends, being provided with a resin step (24) at their longitudinal rear ends, and annularly covered with intermittent resin layers in their longitudinal forward portions; and
when the threadable engagement of said nut (3) with said joint body (1) is completed after a front ridge of said corrugated pipe (4) passes the nails (25) of said sleeve (2), (a) a front ridge of said corrugated pipe (4) sandwiched by the nails (25) of said sleeve (2) and said gasket (5) being flattened, resulting in gas-tight communication between said corrugated pipe (4) and the through-hole (14) of said joint body (1), and (b) said intermittent resin layers of said sleeve (2) being removed by contact with the tapered surface (17) of said joint body (1) to bring said metal segments (22) into contact with the tapered surface (17) of said joint body (1), thereby achieving electric connection between said joint body (1) and said corrugated pipe (4) via said sleeve (2).
